# EUROPEAN PATENT APPLICATION

(11) **EP 4 432 751 A1**
(43) Date of publication of application: **18.09.2024**
(21) Application number: 21964001.8
(22) Date of filing: 10.11.2021
(51) Int. Cl.: H04W 72/04, H04W 72/56, H04W 48/08

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2021/041358
(87) International publication number: WO 2023/084642

(57) **Abstract**

A terminal according to one aspect of the present disclosure includes: a receiving section configured to receive, when a first physical cell ID (PCI) corresponding to a serving cell and a second PCI corresponding to a non-serving cell become active, information on a TCI state corresponding to each of the first and second PCIs; and a control section configured to control, based on the information on the TCI state corresponding to each of the first and second PCIs, reception of DL signals on assumption that the DL signals transmitted from the respective cells do not overlap each other in a time domain, or to control, when the DL signals transmitted from the respective cells overlap each other in the time domain, the reception of the DL signals based on a given rule.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, a radio communication system after Rel. 16/5G), it is assumed that communication is controlled based on mobility between a plurality of cells (inter-cell mobility) including a non-serving cell or inter-cell mobility using a plurality of transmission/reception points (for example, multi-TRPs (MTRP)).

However, when communication is performed using a plurality of cells, a way of controlling reception of a DL signal or transmission of a UL signal depending on the number of physical cell IDs supported/activated by a UE becomes a problem.

The present disclosure has been made in view of the above point, and an object thereof is to provide a terminal, a radio communication method, and a base station capable of appropriately performing communication even in a case where communication is performed using a plurality of transmission points.

### Solution to Problem

A terminal according to one aspect of the present disclosure includes: a receiving section configured to receive, when a first physical cell ID (PCI) corresponding to a serving cell and a second PCI corresponding to a non-serving cell become active, information on a TCI state corresponding to each of the first and second PCIs; and a control section configured to control, based on the information on the TCI state corresponding to each of the first and second PCIs, reception of DL signals on assumption that the DL signals transmitted from the respective cells do not overlap each other in a time domain, or to control, when the DL signals transmitted from the respective cells overlap each other in the time domain, the reception of the DL signals based on a given rule.

### Advantageous Effects of Invention

According to an aspect of the present disclosure, it is possible to appropriately perform communication even in a case where communication is performed using a plurality of transmission points.

### Brief Description of Drawings

[FIG. 1] Figs. 1A and 1B are diagrams illustrating an example of inter-cell mobility.
[FIG. 2] Fig. 2 is a diagram illustrating an example of an activated TCI state according to a first embodiment.
[FIG. 3] Fig. 3 is a diagram illustrating an example illustrating reception control of a DL signal according to a second embodiment.
[FIG. 4] Fig. 4 is a diagram illustrating another example illustrating the reception control of the DL signal according to the second embodiment.
[FIG. 5] Fig. 5 is a diagram illustrating an example illustrating transmission control of a UL signal according to the second embodiment.
[FIG. 6] Fig. 6 is a diagram illustrating an example illustrating reception control of a DL signal according to a third embodiment.
[FIG. 7] Fig. 7 is a diagram illustrating an example illustrating reception control of a PDCCH according to a fourth embodiment.
[FIG. 8] Fig. 8 is a diagram illustrating an example of a schematic configuration of a radio communication system according to an embodiment.
[FIG. 9] Fig. 9 is a diagram illustrating an example of a configuration of a base station according to the embodiment.
[FIG. 10] Fig. 10 is a diagram illustrating an example of a configuration of a user terminal according to the embodiment.
[FIG. 11] Fig. 11 is a diagram illustrating an example of a hardware configuration of the base station and the user terminal according to the embodiment.
[FIG. 12] Fig. 12 is a diagram illustrating an example of a vehicle according to the embodiment.

### Description of Embodiments

### (TCI, Spatial Relation, and QCL)

In NR, controlling reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) based on a transmission configuration indication state (TCI state) is being studied.

The TCI state may represent what is applied to a downlink signal/channel. A state corresponding to the TCI state applied to an uplink signal/channel may be expressed as a spatial relation.

The TCI state is information on a quasi-co-location (QCL) of the signal/channel and may also be referred to as a spatial Rx parameter, spatial relation information, or the like. The TCI state may be configured in the UE for each channel or each signal.

The QCL is an indicator indicating a statistical property of the signal/channel. For example, this may mean that, when a certain signal/channel and another signal/channel have a QCL relationship, it may be assumed that at least one of a Doppler shift, a Doppler spread, an average delay, a delay spread, and a spatial parameter (for example, the spatial Rx parameter) is the same (the QCL for at least one of the foregoing) between the plurality of different signals/channels.

It is noted that the spatial Rx parameter may correspond to a UE reception beam (for example, a reception analog beam), and the beam may be specified based on a spatial QCL. A QCL (or at least one element of the QCL) in the present disclosure is interchangeable with a spatial QCL (sQCL).

A plurality of types of QCL (QCL types) may be defined. For example, parameters (or parameter sets) of four different QCL types A to D that can be assumed to be identical may be provided, and the corresponding parameters (which may be referred to as QCL parameters) are described as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relationship with another CORESET, channel, or reference signal.

Based on a TCI state of the signal/channel or the QCL assumption, the UE may also determine at least one of a transmission beam (Tx beam) and a reception beam (Rx beam) of the corresponding signal/channel.

The TCI state may be, for example, information on the QCL of a target channel (in other words, a reference signal (RS) for the corresponding channel) and another signal (for example, another RS). The TCI state may be configured (instructed) by higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

It is noted that, a channel/signal to which the TCI state is applied may be referred to as a target channel/reference signal (RS), simply a target, or the like, and the other signal may be referred to as a reference reference signal (reference RS), a source RS, simply a reference, or the like.

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relationship with the channel may be, for example, at least one of a synchronization signal block (SSB), a channel state information reference signal (CSI-RS), a sounding reference signal (SRS), a tracking CSI-RS (also referred to as a tracking reference signal (TRS)), a QCL detection reference signal (also referred to as a QRS), a demodulation reference signal (DMRS), or the like.

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An RS of QCL type X in a TCI state may mean an RS in a QCL type X relationship with (DMRS of) a certain channel/signal, and this RS may be referred to as a QCL source of QCL type X in the TCI state.

### (Inter-Cell Mobility)

In NR, studies are underway to allow one or more transmission/reception points (TRPs)(multi-TRPs (MTRPs)) to perform DL transmission to the UE. In addition, it is considered that the UE performs UL transmission to one or a plurality of TRPs.

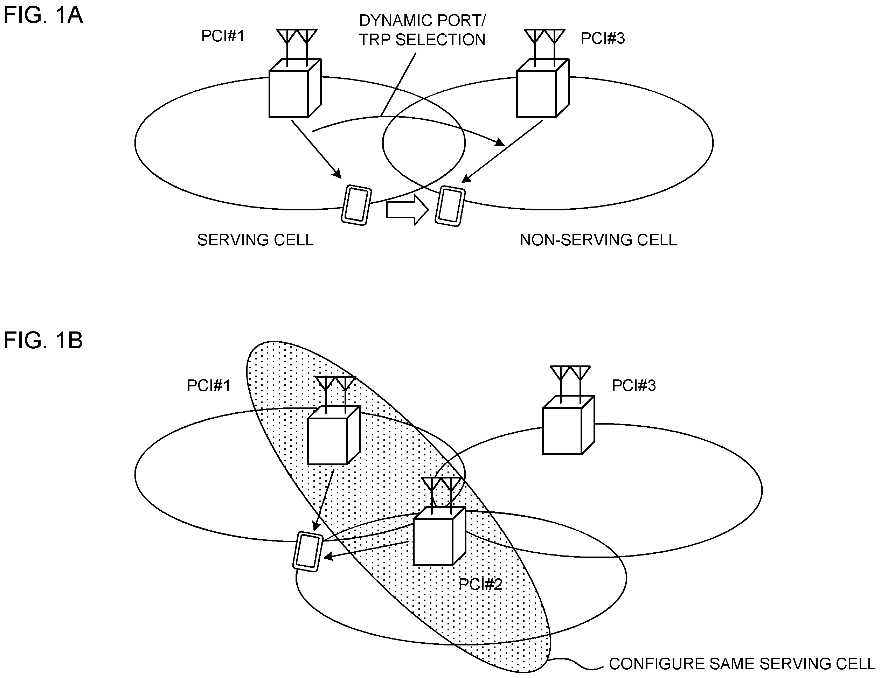

It is conceivable that the UE receives channels/signals from a plurality of cells/TRPs in inter-cell mobility (for example, L1/L2 inter cell mobility) (refer to Figs. 1A and 1B).

Fig. 1A illustrates an example of inter-cell mobility (for example, single-TRP inter-cell mobility) including a non-serving cell. In the UE, one TRP (or single TRP) may be configured in each cell. Here, a case in which the UE receives the channel/signal from the base station/TRP of cell #1 that is the serving cell and the base station/TRP of cell #3 that is not the serving cell (non-serving cell) is illustrated. For example, this corresponds to a case in which the UE switches from cell #1 to cell #3 (for example, fast cell switch).

In this case, selection of a port (for example, antenna port)/TRP may be performed dynamically. This may be performed based on the selection of the port (for example, antenna port)/TRP or a TCI state instructed or updated by the DCI/MAC CE. Here, a case in which setting of different physical cell IDs (for example, PCIs) is supported for the cell #1 and the cell #3 is illustrated.

Fig. 1B illustrates an example of a multi-TRP scenario (for example, inter-cell mobility in the case where multi-TRPs are used (multi-TRP inter-cell mobility)). In the UE, a plurality of (for example, two) TRPs (or different CORESET pool indexes) may be configured in each cell. Here, a case in which the UE receives a channel/signal from TRP #1 and TRP2 is illustrated. In addition, here, a case in which TRP #1 corresponds to a physical cell ID (PCI) #1 and TRP #2 corresponds to PCI #2 is illustrated.

The multi-TRPs (TRPs #1 and #2) may be connected by an ideal/non-ideal backhaul, and information, data, and the like may be exchanged. The same or different codeword (CW) and the same or different layer may be transmitted from each TRP of the multi-TRPs. Non-coherent joint transmission (NCJT) may be used as one form of multi-TRP transmission, as illustrated in Fig. 1B. Here, a case in which NCJT is performed between TPRs corresponding to different PCIs is illustrated. It is noted that the same serving cell configuration may be applied/configured for TRP #1 and TRP #2.

A plurality of PDSCHs (multi-PDSCHs) subjected to the NCJT may be defined as partially or completely overlapping regarding at least one of time domain and frequency domain. That is, a first PDSCH from TRP #1 and a second PDSCH from TRP #2 may overlap in at least one of time resource and frequency resource. The first PDSCH and the second PDSCH may be used for transmission of the same TB or may be used for transmission of different TBs.

The first PDSCH and the second PDSCH may be assumed not to be in a quasi-co-location (QCL) relationship (not to be quasi-co-located). Reception of the multiple PDSCHs is interchangeable with the simultaneous reception of PDSCHs that are not of a certain QCL type (for example, QCL type D).

A plurality of PDSCHs (which may be referred to as multiple PDSCHs) from the multi-TRPs may be scheduled by using one piece of DCI (single DCI (S-DCI), single PDCCH) (single master mode). One piece of DCI may be transmitted from one TRP of the multi-TRPs. A configuration using one piece of DCI in the multi-TRPs may be referred to as single DCI-based multi-TRPs (mTRP/MTRP).

Each of the plurality of PDSCHs from the multi-TRPs may be scheduled by using a plurality of pieces of DCI (multi-DCI (M-DCI), multiple PDCCHs (multi-master mode). The plurality of pieces of DCI may be respectively transmitted from the multi-TRPs. A configuration using the plurality of pieces of DCI in the multi-TRPs may be referred to as multi-DCI-based multi-TRPs (mTRP/MTRP).

It may be assumed that the UE transmits, to different TRPs, different CSI reports (CSI reports) regarding the respective TRPs. Such CSI feedback may be referred to as separate feedback, separate CSI feedback, or the like. In the present disclosure, "separate" may be interchangeable with "independent".

In Rel. 17 NR and later, it is assumed that the MAC CE/DCI supports beam instruction to TCI states associated with different PCIs. In addition, in Rel. 18 NR or later, it is assumed that an instruction to change the serving cell to a cell having a different PCI is supported by MAC CE/DCI.

### (Serving Cell/Non-Serving Cell)

The number of physical cell IDs (for example, supported/active PCI) supported/activated by a UE in communication may be determined based on UE capability (for example, UE capability). For example, the number X of PCIs supported by the UE may be reported as UE capability information. X may be, for example, 1 to 7. In addition, the physical cell ID to be supported/activated may be associated with an active TCI state.

### <Option 1>

When the number of supported/activated PCIs is one, in the UE, a TCI state related to one PCI (for example, either a serving cell or a non-serving cell) may be activated. That is, when the number of supported PCIs is one, the MAC CE can switch the serving cell or the non-serving cell. When there are more than one supported TCI states, a TCI state field may instruct one of the active TCI states associated with the different PCIs. The TCI state field may be a field included in the DCI.

### <Option 2>

Alternatively, when the number of supported/activated PCIs is one, in the UE, the TCI state related only to the serving cell may be activated. That is, when the number of supported PCIs is one, L1/L2 intercell mobility is not supported (for example, the MAC CE is not supported to switch the serving cell or the non-serving cell). When there are more than one supported TCI states, a TCI state field may instruct one of the active TCI states associated with the different PCIs.

Information (for example, information type and content) that can be transmitted from the non-serving cell to the UE has been studied. For example, it is studied that system information is transmitted only from the serving cell (for example, the UE receives the system information only from the serving cell). On the other hand, it is studied that other information (for example, paging information/short message) is transmitted not only from the serving cell but also from the non-serving cell, or is transmitted only from the serving cell.

Prior to the existing system (for example, Rel. 16), after the UE receives a paging/short message, the UE performs a control operation to receive the system information. For example, when the UE supports UE capability corresponding to an earthquake and tsunami warning system (ETWS), the UE is controlled so as to acquire a given system information block (for example, SIB6/SIB7) after receiving the short message.

It is assumed that the UE supports/is activated with only one cell/PCI (for example, the PCI corresponding to either the serving cell or the non-serving cell), or the UE supports only one active TCI state. In such a case, a way of controlling the UE operation in order to appropriately receive the system information becomes a problem.

In particular, considering a case (for example, the option 2) in which only the PCI other than the PCI of the serving cell (alternatively, the TCI state corresponding to the PCI other than the PCI of the serving cell) is activated, how the UE acquires the system information becomes a problem. For example, when transmission of the paging/short message from the non-serving cell is allowed/supported, a way of receiving the system information after receiving the paging/short message from the non-serving cell becomes a problem.

In addition, in a case where the UE supports/is activated with a plurality of cells/PCIs (for example, the PCI corresponding to either the serving cell or the non-serving cell), a DL signal (alternatively, a UL signal) corresponding to a certain cell/PCI and a DL signal (alternatively, a UL signal) corresponding to another cell/PCI may overlap each other in a time domain. In such a case, when the active TCI states corresponding to respective cells/respective PCIs are different from each other, a way of controlling reception (alternatively, transmission of the UL signal) of the DL signal corresponding to another cell/PCI becomes a problem.

The present inventors have studied UE operation in a case where the number of PCIs to become active is one out of the PCI corresponding to the serving cell and the PCI corresponding to the non-serving cell, and have conceived an aspect of the present embodiment.

In addition, the present inventors have focused on the fact that the DL signals/UL signals corresponding to the respective cells may overlap each other in the time domain when the first PCI corresponding to the serving cell and the second PCI corresponding to the non-serving cell become active, have studied the UE operation in such a case, and have conceived another aspect of the present embodiment.

Hereinafter, embodiments according to the present disclosure will be described in detail with reference to the drawings. It is noted that each of the following aspects (for example, each case) may be used independently, or may be applied by combining at least two of the aspects.

In the present disclosure, "A/B" and "at least one of A or B" may be interchangeable with each other. Furthermore, in the present disclosure, "A/B/C" may mean "at least one of A, B, and C".

In the present disclosure, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, an upper layer parameter, an information element (IE), a setting, and the like may be interchangeable with each other. In the present disclosure, a Medium Access Control control element (MAC control element (CE)), an update command, an activation/deactivation command, and the like may be interchangeable with each other.

In the present disclosure, the higher layer signaling may be any of, for example, radio resource control (RRC) signaling, medium access control (MAC) signaling, broadcast information, and the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeable with each other. In the present disclosure, a sequence, a list, a set, a group, a cohort, a cluster, a subset, and the like may be interchangeable with each other.

In the present disclosure, a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeable with each other.

In addition, the spatial relation information Identifier (ID) (TCI state ID) and the spatial relation information (TCI state) may be interchangeable with each other. The "spatial relation information" may be interchangeable with a "set of spatial relation information", "one or a plurality of pieces of spatial relation information", or the like. A TCI state and TCI may be interchangeable with each other.

In the following embodiments, "a plurality of" and "two" may be interchangeable with each other. The "TAG" and the "TAG ID" may be interchangeable with each other. In addition, the "cell", the "CC", and the "carrier" may be interchangeable with each other.

The following description may be applied in inter-cell mobility (for example, L1/L2 inter cell mobility), or may be applied in communication control other than the inter-cell mobility.

The number of active PCIs being one may indicate that the number of active PCIs of the serving cell and the non-serving cell is one (alternatively, one of the PCI corresponding to the serving cell and the PCI corresponding to the non-serving cell becomes active) in the inter-cell mobility.

### (Radio Communication Method)

### <First Embodiment>

In the first embodiment, an example of UE operation based on the number of active physical cell IDs (for example, PCIs) or the number of PCIs to become active will be described.

The PCI to become active may be a PCI associated with a TCI state to be activated for a DL signal/DL channel. The DL signal/DL channel may be, for example, PDCCH/PDSCH. Further, in the present disclosure, the PCI may be interchangeable with a TRP index, a cell index, an additional index, or a given index.

The UE may notify a network (for example, a base station) of the number of PCIs (for example, PCIs that can be activated simultaneously) supported by its own terminal as UE capability information. Alternatively, the network may use higher layer signaling to configure/notify the UE of the number of PCIs to become active.

### [Option 1-1A]

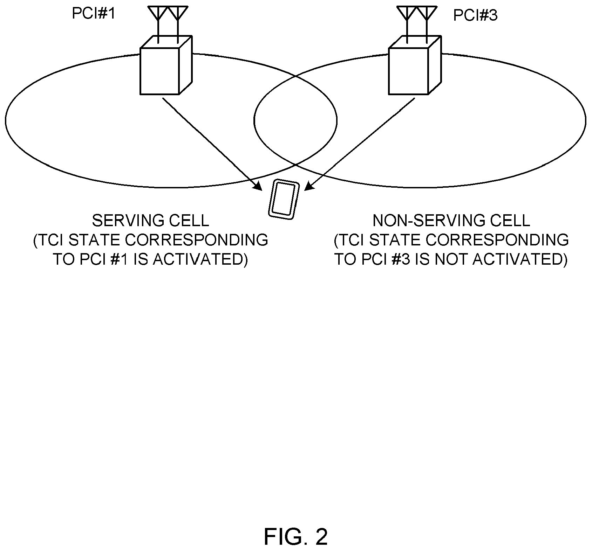

When the number of PCIs to become active is one, it may mean that a PCI corresponding to a specific cell becomes active. The specific cell may be, for example, a serving cell (refer to Fig. 2). The UE may not assume that a TCI state other than the TCI state associated with the serving cell (alternatively, the PCI of the serving cell) is activated.

That is, the UE may assume that only the TCI state associated with the serving cell (alternatively, the PCI of the serving cell) is activated when the number of PCIs to become active is one. The UE may receive the system information transmitted from the serving cell based on the active TCI state associated with the serving cell (alternatively, the PCI of the serving cell). As a result, even when the system information is transmitted only from the serving cell, the system information can be appropriately received.

In addition, even if the transmission of the paging/short message is supported/allowed to be transmitted from the non-serving cell, by performing configuration in which only the TCI state related to the PCI of the serving cell is activated, it is possible to prevent a case in which the system information cannot be appropriately received.

### [Option 1-1B]

Alternatively, the specific cell may be a non-serving cell. For example, when the number of PCIs to become active is one, a TCI state associated with the one PCI (for example, the PCI of the non-serving cell) different from the PCI of the serving cell may be activated.

For Option 1-1B, the UE may acquire the system information based on the information transmitted from the non-serving cell. For example, the base station may transmit, to the UE, the UE specific information transmitted from the non-serving cell by including system information notified to the UE in common or information corresponding to the system information.

For example, the system information may be notified to the UE by using RRC reconfiguration signaling (for example, RRC re-configuration signaling) that transmits the same information element (IE) as the system information transmitted by using the downlink shared channel (for example, PDSCH) of the non-serving cell.

For the UE in the RRC connection state (for example, RRC_CONNECTED), the network can notify the UE of the system information by dedicated signaling (for example, dedicated signaling) using an RRCI reconfiguration message. Such notification of the system information may be performed, for example, in a case where an active BWP that does not have a common search space configured to monitor the system information or paging (or according to a request from the UE) is configured in the UE (condition 1-1).

In this manner, the system information may be notified to the UE having the active TCI state associated with the PCI different from the serving cell by using the UE-dedicated RRC of the non-serving cell.

As a result, even if the transmission of the paging/short message is supported/allowed to be transmitted from the non-serving cell, the system information can be received after the paging/short message.

Alternatively, the following condition may be added in addition to the condition 1-1 (alternatively, in place of the condition 1-1).

Condition 1-2: a case in which the UE is configured with an active BWP having a common search space configured for the UE to monitor system information and paging.

However, while a common search space TCI state is associated with a serving cell, an activated unified TCI state is associated with an additional PCI (for example, a PCI corresponding to a non-serving cell). Alternatively, the common search space TCI state may be associated with a PCI different from the activated unified TCI state.

### [Option 1-2]

The number of PCIs to become active may be controlled to be at least two or more. That is, each UE may perform UE report such that the number of PCIs to become active becomes two or more, or the base station may configure/notify the UE of two or more as the number of PCIs to become active.

### [Option 1-3]

When the base station transmits the system information/paging/short message from the serving cell, if the TCI state associated with only the PCI of the non-serving cell by the UE is activated, the base station may perform a control operation to update the activated TCI state of the UE so that the TCI state associated with the PCI of the serving cell is activated. For example, the base station may perform the control operation to update, by using the MAC CE/DCI, the active TCI state (for example, the active TCI state corresponding to the PCI of the non-serving cell) configured in the UE to a TCI state associated with the PCI of the serving cell.

After updating the active TCI state to the TCI state corresponding to the serving cell based on the information transmitted from the base station (alternatively, after the active PCI is updated to the PCI of the serving cell), the UE may receive the system information transmitted from the serving cell based on the updated TCI state. As a result, even when the system information is transmitted only from the serving cell, the system information can be appropriately received.

### <Second Embodiment>

In the second embodiment, a case in which the number of active physical cell IDs (for example, PCIs) is two or more will be described.

In the following description, a case in which the first PCI corresponding to the serving cell and the second PCI corresponding to the non-serving cell become active will be described as an example, but the present invention is not limited thereto. The present invention may be applied to a case in which two or more PCIs correspond to a certain cell (for example, the serving cell), and the active TCI state is separately configured (for example, different TCI states are activated for each PCI) for the respective PCIs.

In addition, the following description may be suitably applied to a case in which the UE does not have the capability of simultaneously receiving two QCLs (for example, QCL type D). The above-mentioned case in which the UE does not have the capability of simultaneously receiving two QCL (for example, QCL type D) may be, for example, a case in which a first DL signal corresponding to a first active TCI state and a second DL signal corresponding to a second active TCI state overlap each other in the same time domain (for example, symbols), and a case in which reception of the first DL signal using the first active TCI state and reception of the second DL signal using the second active TCI state are not supported.

Alternatively, the following description may be suitably applied to a case in which the UE does not have the capability of performing simultaneous transmission by using different beams.

Different TCI states associated with different PCIs may be included in different code points of a TCI state notification field included in the DCI. For example, at least one of the plurality of code points specifiable in the TCI state application field may correspond to a TCI state associated with the first PCI, and at least another one may correspond to a TCI state associated with the second PCI.

When the first PCI corresponding to the serving cell and the second PCI corresponding to the non-serving cell become active, the UE may control the reception of the DL signal based on at least one of the following option 2-1A and option 2-2A for the DL signal transmitted from each cell. The DL signal may be interchangeable with the DL channel.

### [Option 2-1A]

A first DL signal #A transmitted from the serving cell and a second DL signal #B transmitted from the non-serving cell may be controlled so as not to be transmitted in the same time domain (for example, in the same symbol). The UE may perform a control operation such that it is not assumed that the first DL signal #A and the second DL signal #B are received/monitored in the same time domain, the first DL signal #A and the second DL signal #B are not required to be received/monitored in the same time domain, or the first DL signal #A and the second DL signal #B are not received/monitored in the same time domain.

The first DL signal #A may be system information (alternatively, the PDSCH including the system information).

### [Option 2-2A]

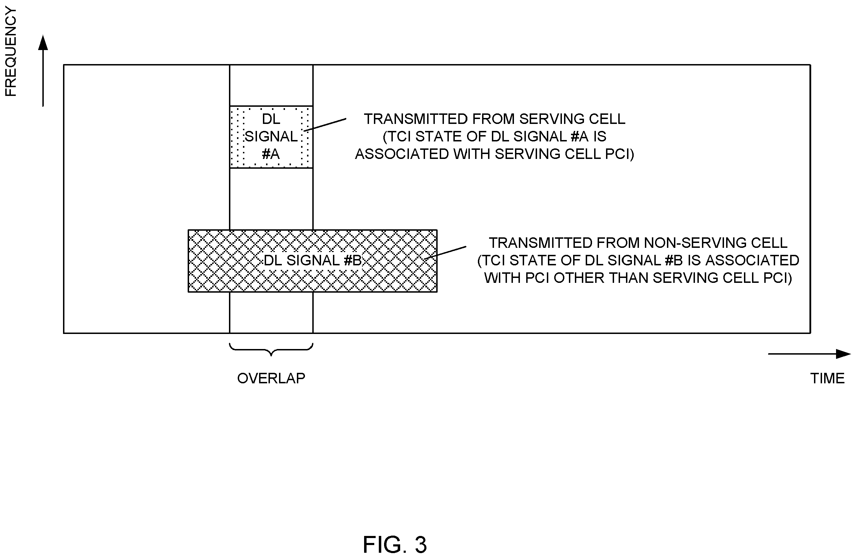

When the first DL signal #A transmitted from the serving cell and the second DL signal #B transmitted from the non-serving cell collide with each other/overlap each other in the same time domain (for example, in the same symbol) (refer to Fig. 3), reception processing may be controlled based on a given rule/a given reference.

Fig. 3 illustrates an example of a case in which the first DL signal #A transmitted from the serving cell and the second DL signal #B transmitted from the non-serving cell collide with each other/overlap each other in the same time domain (for example, in the same symbol). A TCI state corresponding to the first DL signal #A is associated with a PCI of the serving cell, and a TCI state corresponding to the second DL signal #B is associated with a PCI (here, the PCI/additional PCI of the non-serving cell) different from the PCI of the serving cell. That is, the first DL signal #A and the second DL signal #B are associated with the TCI states respectively related to different PCIs.

The given rule/the given reference may be a priority set between the first DL signal #A and the second DL signal #2. The UE may preferentially receive the DL signal corresponding to any one of the cells (or PCI).

For example, the UE may prioritize the reception of the first DL signal #A. The UE may perform a control operation so as not to receive (alternatively, drop/skip/cancel the reception/monitoring of) the second DL signal #B having a low priority.

Alternatively, the UE may receive the second DL signal #B having a lower priority based on the QCL type D assumption (alternatively, the TCI state used to receive the first DL signal #A) corresponding to the first DL signal #A.

Here, the second UL signal #B is prioritized, but the present invention is not limited thereto, and the first UL signal #A may be prioritized.

Alternatively, which of the first DL signal #A and the second DL signal #2 is prioritized may be determined based on a content of the DL signal. The priority based on the content of the DL signal may be defined in advance in the specification, or may be configured from the base station to the UE by using higher layer signaling or the like.

The first DL signal #A/the second DL signal #B may be at least one of CORESET, search space, DCI, PDCCH, PDSCH, CSI-RS, TRS, and SSB.

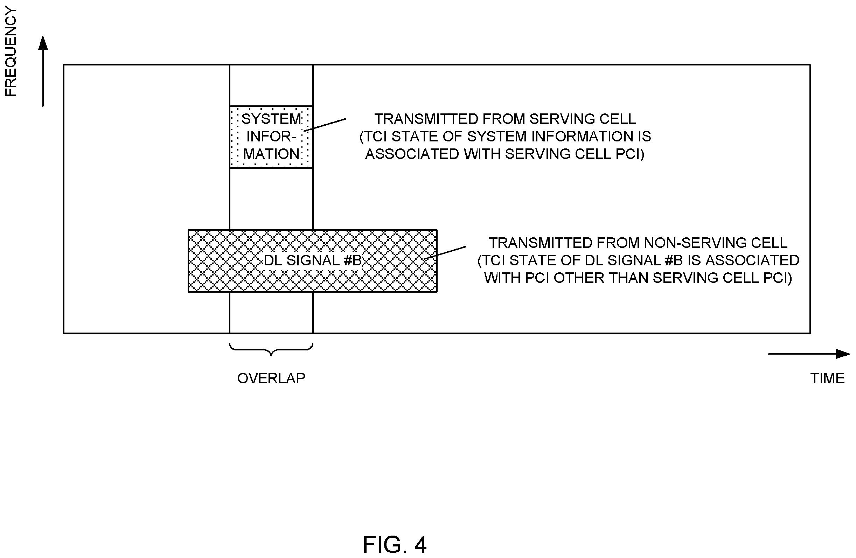

The first DL signal #A may be the system information (alternatively, the PDSCH including the system information) (refer to Fig. 4). Alternatively, the first DL signal #A may be CORESET used for transmission of the system information. Alternatively, the first DL signal #A may be a paging/short message. Alternatively, the first DL signal #A may be a common search space of a given type (for example, a common search space of type 0/0A/1/2/3). Alternatively, the first DL signal #A may be a UE specific search space. Alternatively, the first DL signal #A may be a PDSCH scheduled by the common search space of the given type (for example, the common search space of type 0/0A/1/2/3).

The above-described option 2-1A/option 2-2A may be applied to a plurality of frequency ranges, or may be applied only to a specific frequency range. The plurality of frequency ranges may include, for example, at least a first frequency range (for example, FR1) and a second frequency range (for example, FR2) having a higher frequency than that of the first frequency range. The specific frequency range may be the second frequency range (for example, FR2). When the options are applied only to a specific frequency range, the options may be applied only when QCL assumptions/TCI states of the first DL signal #A and the second DL signal #B are not the same (for example, when the QCL type D is not the same).

When the first PCI corresponding to the serving cell and the second PCI corresponding to the non-serving cell become active, the UE may control the transmission of the UL signal based on at least one of the following options 2-1B and option 2-2B for the UL signal to be transmitted to each cell. The UL signal may be interchangeable with a UL channel.

### [Option 2-1B]

The first UL signal #A scheduled to be transmitted to the serving cell and the second UL signal #B scheduled to be transmitted to the non-serving cell may be controlled so as not to overlap each other in the same time domain (for example, in the same symbol). The schedule may be interchangeable with configuration/activation. The UE may perform a control operation such that it is not assumed that the first UL signal #A and the second UL signal #B are transmitted (or scheduled) in the same time domain, the first UL signal #A and the second UL signal #B are not required to be transmitted in the same time domain, or the first UL signal #A and the second UL signal #B are not transmitted in the same time domain.

### [Option 2-2B]

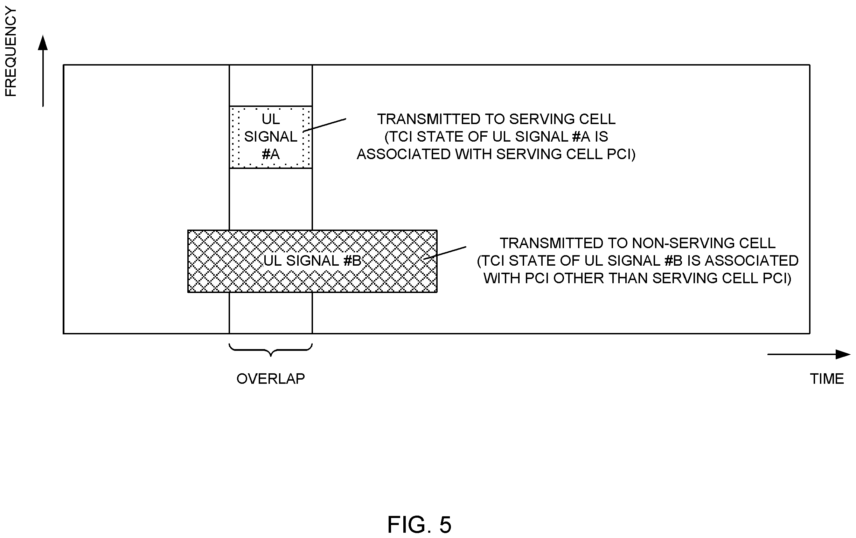

When the first UL signal #A scheduled to be transmitted to the serving cell and the second UL signal #B scheduled to be transmitted to the non-serving cell collide with each other/overlap each other in the same time domain (for example, in the same symbol) (refer to Fig. 5), transmission processing may be controlled based on a given rule/a given reference.

Fig. 5 illustrates an example of a case in which the first UL signal #A scheduled to be transmitted to the serving cell and the second UL signal #B scheduled to be transmitted to the non-serving cell collide with each other/overlap each other in the same time domain (for example, in the same symbol). A case is illustrated in which a TCI state corresponding to the first UL signal #A is associated with a PCI of the serving cell, and a TCI state corresponding to the second UL signal #B is associated with a PCI (here, the PCI/additional PCI of the non-serving cell) different from the PCI of the serving cell. That is, the first UL signal #A and the second UL signal #B are associated with the TCI states related to different PCIs. It is noted that the TCI state may be interchangeable with spatial relation/UL TCI/joint TCI/SRI.

The given rule/the given reference may be a priority set between the first UL signal #A and the second UL signal #2. The UE may preferentially transmit the UL signal corresponding to any one of the cells (or PCIs).

For example, the UE may prioritize the transmission of the second UL signal #B. The UE may perform a control operation so as not to transmit (alternatively, drop/skip/cancel the transmission of) the first UL signal #A having a lower priority.

Alternatively, the UE may transmit the first DL signal #A having a low priority based on the TCI state (or spatial relation/UL TCI/joint TCI/SRI) used to transmit the second UL signal #B.

Here, the second UL signal #B is prioritized, but the present invention is not limited thereto, and the first UL signal #A may be prioritized.

Alternatively, which of the first UL signal #A and the second UL signal #2 is prioritized may be determined based on a content of the UL signal. The priority based on the content of the UL signal may be defined in advance in the specification, or may be configured from the base station to the UE by using higher layer signaling or the like.

The first UL signal #A/the second UL signal #B may be at least one of UCI (HARQ-ACK/CSI/SR), PUSCH, PUCCH, SRS, and PRACH.

The above-described option 2-1 B/option 2-2B may be applied to a plurality of frequency ranges, or may be applied only to a specific frequency range. The plurality of frequency ranges may include, for example, at least a first frequency range (for example, FR1) and a second frequency range (for example, FR2) having a higher frequency than that of the first frequency range. The specific frequency range may be the second frequency range (for example, FR2). When the options are applied only to a specific frequency range, the options may be applied only when spatial relations/TCI states of the first UL signal #A and the second UL signal #B are not the same (for example, when the QCL type D is not the same).

### <Third Embodiment>

In a third embodiment, an example of UE operation in a case where the number of active physical cell IDs (for example, PCIs) is one and a TCI state related to a PCI (for example, an additional PCI) different from the PCI of the serving cell is activated will be described.

When the number of PCIs to become active is one and the TCI state related to the additional PCI is activated, the UE may apply at least one of the following option 3-1 to option 3-4.

### [Option 3-1]

The UE may monitor/receive a given DL signal (alternatively, the UE may be required to monitor/receive the given DL signal). The given DL signal may be at least one (or all) of "system information", "CORESET for system information", "paging/short message", "given type of common search space", "UE specific search space", "PDSCH including system information", and "PDSCH scheduled in a given type of common search space". The given type of common search space may be, for example, a type 0/0A/1/2/3 common search space.

### [Option 3-2]

When the QCL assumption of the given DL signal is the same as the active TCI state, the UE may monitor/receive at least one (or all) of the given DL signals (alternatively, the UE may be required to monitor/receive the at least one (or all) of the given DL signals). This means that the UE can receive the given DL signal from the non-serving cell.

### [Option 3-3]

The UE may not monitor/receive at least one (or all) of the given DL signals (alternatively, the UE may not be required to monitor/receive the at least one (or all) of the given DL signals). For example, the option 3-3 may be applied when monitoring/receiving the given DL signals exceeds the UE capability.

For example, the option 3-1 and the option 3-2 may be applied when the UE reports UE capability, otherwise the option 3-3 may be applied.

### [Option 3-4]

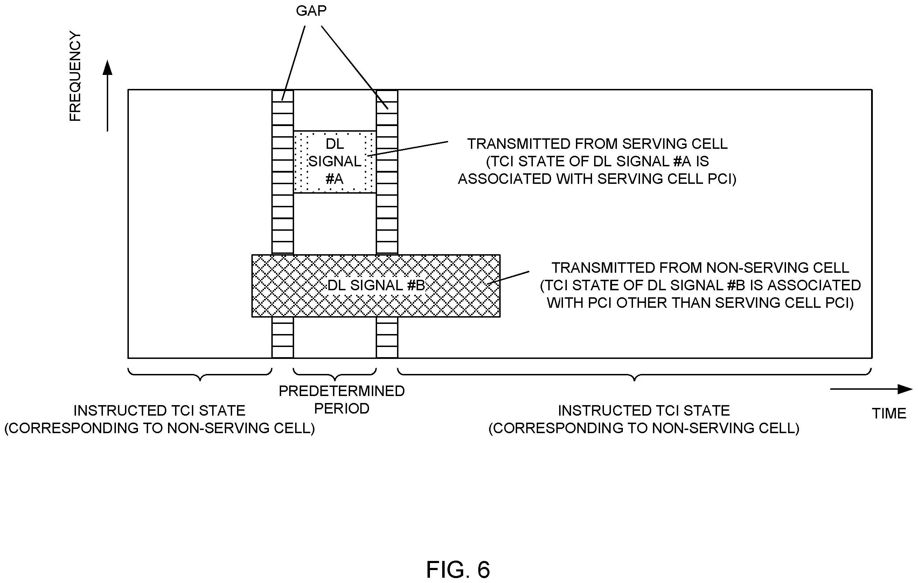

The UE may switch between the QCL assumption and the TCI state based on the passage of a certain time/given period (for example, a certain time duration). The certain time/the given period may be a time for receiving at least one (or all) of the given DL signals. The given DL signal may be a DL signal transmitted from the serving cell (the first DL signal #A in Fig. 6). The UE may monitor/receive at least one (or all) of the given DL signals in the symbol every given period (alternatively, the UE may be required to monitor/receive the at least one (or all) of the given DL signals).

The UE may control the monitoring/reception of the given DL signal based on the TCI state corresponding to the signal from the serving cell in the given period. That is, when the PCI corresponding to the non-serving cell becomes active, the UE performs a control operation to monitor the DL signal based on the TCI associated with the PCI corresponding to the serving cell in the given period. On the other hand, the UE may control the monitoring/reception of the DL signal based on the TCI state (for example, the instructed TCI state) corresponding to the non-serving cell in other periods.

Further, a gap may be provided before and after a certain time (alternatively, the monitoring period of the first DL signal #A). The gap may be referred to as a beam switching gap. The UE may use the gap to switch TCI states related to different PCIs. The UE may perform a control operation so as not to transmit/receive any signal (alternatively, transmission/reception is not required) during the beam switching period (or gap). Such UE operation may be supported/applied only when the UE capability is reported.

### [Variation]

The third embodiment is suitably applied when the number of PCIs to become active is one and the TCI state related to the additional PCI is activated, but this application case is not limited thereto. For example, the present invention may also be applied to a case in which a given DL signal from the serving cell overlaps another DL signal from the non-serving cell (for example, the second embodiment) when a plurality of TCI states respectively associated with a PCI of the serving cell and an additional PCI (for example, a PCI different from the serving cell) are activated by the UE.

### <Fourth Embodiment

In a fourth embodiment, a description will be given as to a reception operation/transmission operation when the number of active physical cell IDs (for example, PCIs) is two or more and a signal corresponding to the first PCI and a signal corresponding to the second PCI overlap each other in the time domain. It is noted that the fourth embodiment may be applied in appropriate combination with the contents (a part/all) of the second embodiment.

In the following description, a first signal #A corresponding to the first PCI of the serving cell and a second signal #B corresponding to the second PCI of the non-serving cell will be described as an example, but the present invention is not limited thereto.

Regardless of the contents of the first signal #A and the second signal #B, when the first signal #A and the second signal #B are received (alternatively, scheduled) in the same symbol and the QCL type D is different, it is desirable to define a priority order between the first signal #A and the second signal #B.

The first signal #A/the second signal #B may be PDCCH/PDSCH/SSB/CSI-RS/TRS in the DL. The first signal #A/the second signal #B may be PUCCH/PUSCH/SRS in the UL.

For the UL, the term QCL type D is used for unified TCI and the term spatial relation may be used for the TCI state of Rel. 15/16.

At least one of the following options 4-1 and 4-2 may be applied as a prioritization rule of the QCL type D assumption between the first signal #A corresponding to the TCI state associated with the serving cell and the second signal B# corresponding to the TCI state associated with the non-serving cell.

### [Option 4-1]

In the same time domain (for example, in the same symbol), the serving cell may be prioritized over the non-serving cell.

For example, a case in which the first DL signal #A transmitted from the serving cell and the second DL signal #B transmitted from the non-serving cell collide with each other/overlap each other in the same time domain (for example, in the same symbol) is assumed (refer to Fig. 3). Here, a case is illustrated in which the TCI state corresponding to the first DL signal #A is associated with a PCI of the serving cell, and the TCI state corresponding to the second DL signal #B is associated with a PCI (here, the PCI/additional PCI of the non-serving cell) different from the PCI of the serving cell. That is, the first DL signal #A and the second DL signal #B are associated with the TCI states respectively related to different PCIs.

In such a case, the UE preferentially receives the first DL signal #A. For example, the UE may perform a control operation such that the first DL signal #A is received and the second DL signal #B is not received (for example, dropped/cancelled). Alternatively, the UE may perform a control operation to receive the first DL signal #A and the second DL signal #B based on the TCI state corresponding to the first PCI of the serving cell.

It is noted that, here, the case in which the serving cell is prioritized over the non-serving cell has been described, but the present invention is not limited thereto. For example, the non-serving cell may be controlled to be prioritized over the serving cell. Which cell is prioritized may be defined in advance in the specification, or may be configured from the base station to the UE by using higher layer signaling or the like.

### [Option 4-2]

In a certain time domain (for example, in the same symbol), when the QCL types D collide with each other between the same DL signals (for example, the same channel/RS) or when the same DL signals respectively corresponding to different QCL types D collide with each other, the serving cell may be prioritized over the non-serving cell. On the other hand, in a certain time domain (for example, in the same symbol), in a case where the QCL types D collide with each other between different DL signals (for example, different channels/RSs) or in a case where different DL signals respectively corresponding to different QCL types D collide with each other, the priority may be determined based on another rule.

Alternatively, in a certain time domain (for example, in the same symbol), when the QCL types D collide with each other between different DL signals (for example, different channels/RSs) or when different DL signals respectively corresponding to different QCL types D collide with each other, the serving cell may be prioritized over the non-serving cell. On the other hand, in a certain time domain (for example, in the same symbol), in a case where the QCL types D collide with each other between the same DL signals (for example, the same channel/RS) or in a case where the same DL signals respectively corresponding to different QCL types D collide with each other, the priority may be determined based on another rule.

The other rule may be, for example, a rule defined in an existing system (for example, Rel. 15/16). For example, PDCCH may be prioritized over PDSCH. Further, CSI-RS/SSB for L1-RSRP measurement/BFD/RLM may be prioritized over PDSCH.

### <<Priority between PDCCHs>>

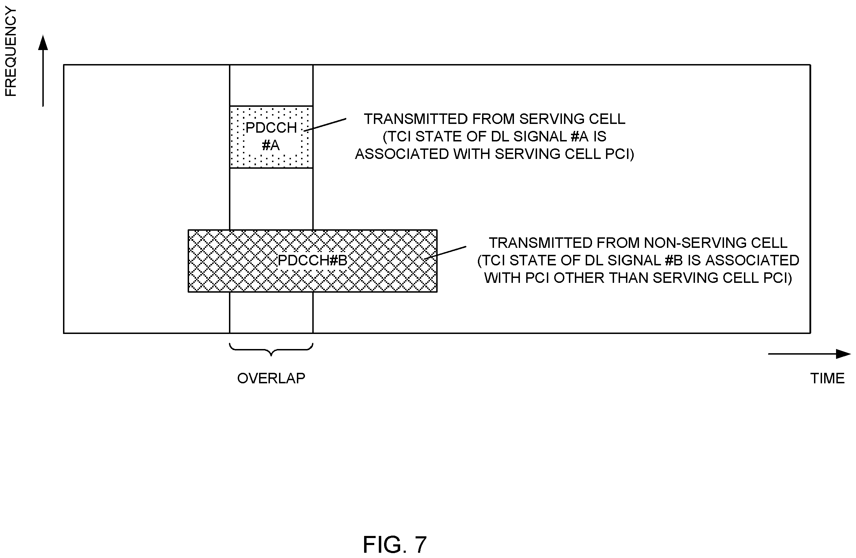

For example, it is assumed that a first PDCCH #A transmitted from the serving cell and a second PDCCH #B transmitted from the non-serving cell collide with each other/overlap each other in the same time domain (for example, in the same symbol) (refer to Fig. 7).

As a priority rule of QCO type (for example, QCL type D) assumption between a PDCCH corresponding to a TCI state associated with the serving cell and a PDCCH corresponding to a TCI state associated with the non-serving cell, a rule defined in the existing system (for example, Rel. 15/16) may be applied.

In Rel.16, when PDCCH monitoring occasions overlap each other, the UE cannot monitor PDCCHs having different QCL types D. For a plurality of CORESETs in overlapping monitoring occasions corresponding to different QCL types D respectively, the UE performs a control operation to monitor/receive only CORESETs having the same QCLtype D as the CORESETs determined according to a given priority rule/a priority order.

The given priority rule/the priority order prioritizes a common search space set over a UE specific search space set (common search space set > UE specific search space set), prioritizes a smaller cell index when a search space set type is the same (low cell index > high cell index), and prioritizes a smaller search space set index when the cell index is the same (low search space set index > high search space set index).

That is, the UE may determine which of the first PDCCH (or CORESET) #A and the second PDCCH (or CORESET) #B overlapping each other in the time domain is prioritized in consideration of priorities in the order of search space type > serving cell index > search space set ID.

Alternatively, at least one of the following options 5-1 to 5-4 may be applied as the priority rule of the QCO type (for example, QCL type D) assumption between the PDCCH corresponding to the TCI state associated with the serving cell and the PDCCH corresponding to the TCI state associated with the non-serving cell.

### [Option 5-1]

The priority may be considered in the order of PCI > search space type > cell index > search space set ID.

### [Option 5-2]

The priority may be considered in the order of search space type > PCI > cell index > search space set ID.

### [Option 5-3]

The priority may be considered in the order of search space type > cell index > PCI > search space set ID.

### [Option 5-4]

The priority may be considered in the order of search space type > cell index > search space set ID > PCI.

It is noted that, in the options 5-1 to 5-4, the case in which the PCI, the search space type, the cell index, and the search space set ID are used as parameters serving as a reference of a priority has been described, but the present invention is not limited thereto. Some of these may not be considered, or other parameters may be considered. The other parameter may be, for example, a start symbol of the DL signal, a priority set to the DL signal (PDCCH), or the like.

When considering the PCI, it may be determined that the PCI of the serving cell has a higher priority than a PCI (for example, the PCI of the non-serving cell) different from the serving cell (priority condition A). Alternatively, the PCI (for example, the PCI of the non-serving cell) different from the serving cell may be determined to have a higher priority than the PCI of the serving cell (priority condition B). Which one of the priority condition A and the priority condition B is applied to the PCI may be defined in advance in the specification, or may be configured from the base station to the UE by using higher layer signaling or the like.

When considering the search space type, it may be determined that the common search space has a higher priority than that of the UE specific search space. It is noted that the present invention is not limited thereto, and the priority may be applied in an opposite manner.

When considering the cell index, it may be determined that a cell index having a lower index has a higher priority than a cell index having a higher index. It is noted that the present invention is not limited thereto, and the priority may be applied in an opposite manner.

When considering the search space set ID, a search space set ID having a lower ID may be determined to have a higher priority than a search space set ID having a higher ID. It is noted that the present invention is not limited thereto, and the priority may be applied in an opposite manner.

When the first UL signal #A corresponding to the first PCI of the serving cell and the second UL signal #B corresponding to the second PCI of the non-serving cell overlap each other in a time domain, a priority rule similar to the priority rule described above (option 4-1 and option 4-2/option 5-1 to option 5-4) may be applied to the UL transmission.

Alternatively, instead of the priority rule being applied to the UL transmission, both the first UL signal #A and the second UL signal #B may be controlled so as not to be scheduled/configured in the same time domain. The UE may not expect the first UL signal #A and the second UL signal #B to be scheduled/configured in the same time domain (for example, in the same symbol). For example, when there is the first UL signal #A configured/scheduled periodically/semi-persistently in a certain symbol, the UE may not expect the second signal #B (for example, the dynamically scheduled second signal #B) to be scheduled in the same symbol.

The UL transmission control may be applied regardless of whether the QCL type D or the spatial relation between the first UL signal #A and the second UL signal #B is the same or different. Alternatively, the UL transmission control may be applied to a case in which the QCL type D or the spatial relation between the first UL signal #A and the second UL signal #B is different.

It is noted that the first UL signal #A may be one in which a corresponding joint TCI/ULTCI or a spatial relation among the PUSCH of a dynamic grant, the PUSCH of the configuration grant, the PUCCH, and a periodic/semi-persistent/aperiodic SRS is associated with the PCI of the serving cell.

The second UL signal #B may be one in which a corresponding joint TCI/ULTCI or a spatial relation among the PUSCH of the dynamic grant, the PUSCH of the configuration grant, the PUCCH, and the periodic/semi-persistent/aperiodic SRS is associated with a PCI different from the PCI of the serving cell.

It is noted that the priority (alternatively, the priority rule) regarding the QCL assumption between the PCI of the serving cell and the PCI of the non-serving cell is applied only to the reception of the DL signal, and may not be applied to the transmission of the UL signal. The reason for this is that, in the UL transmission, only the TCI state corresponding to one cell can be activated for the joint DL/UL TCI state or the UL TCI state for all UL channels/RSs.

### (UE Capability Information)

In the first to fourth embodiments, the following UE capabilities may be configured. It is noted that the UE capability described below may be interchangeable with a parameter (for example, higher layer parameter) configured from the network (for example, base station) to the UE.

The operations of the embodiments may be applied only when a corresponding UE capability is reported.

UE capability information on whether to support L1/L2 inter-cell mobility (or M-TRP intercell) may be defined.

UE capability information on the number of additional PCIs (alternatively, the total number of PCIs including the serving cell PCI) that can be configured by the UE may be defined.

In order to measure/report L1 beam reporting, the UE capability information on the number of additional PCIs (alternatively, the total number of PCIs including the serving cell PCI) that can be configured by the UE may be defined.

UE capability information on the number of active PCIs (for example, the number of supportable PCIs) associated with the active TCI state that can be instructed by the UE may be defined.

The first to fourth embodiments may be configured to be applied to the UE that supports/reports at least one of the UE capabilities described above. Alternatively, the above-described embodiments may be applied to the UE configured from a network.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

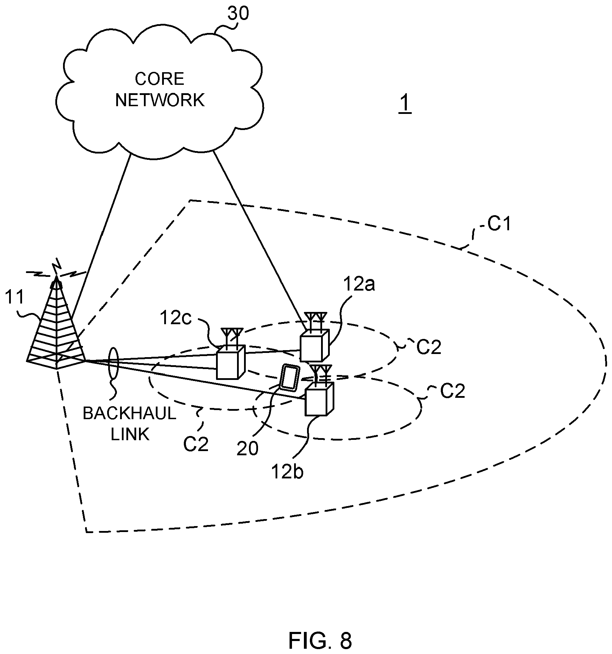

Fig. 8 is a diagram illustrating an example of a schematic configuration of the radio communication system according to the embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used.

The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). It is noted that, the DMRSs may be referred to as "user terminal-specific reference signals (UE-specific reference signals)".

### (Base Station)

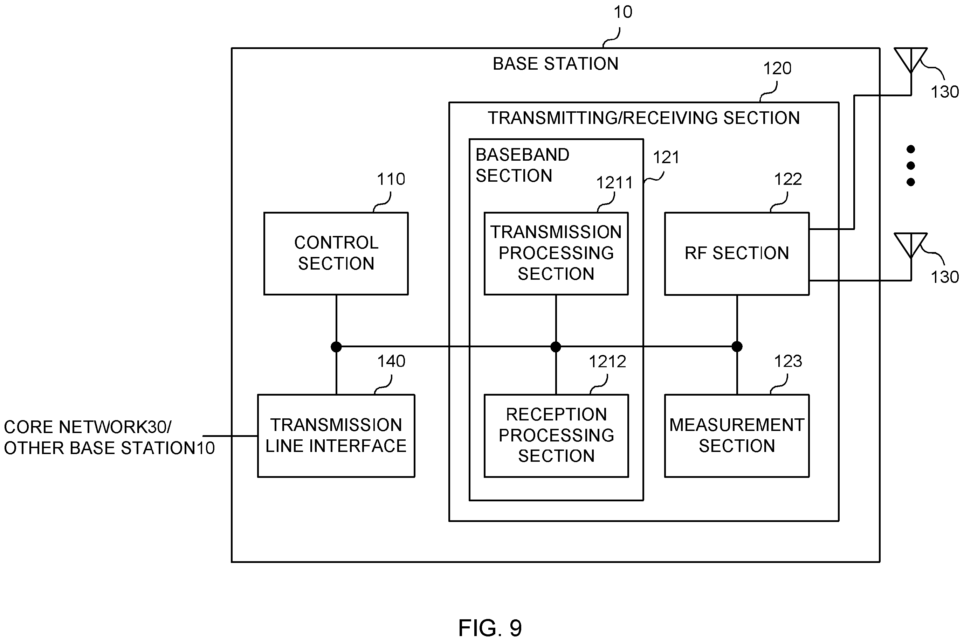

Fig. 9 is a diagram illustrating an example of a configuration of the base station according to the embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmitting/receiving antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmitting/receiving antenna 130, and the transmission line interface 140.

The transmitting/receiving section 120 may notify the system information using information transmitted from a cell of the PCI to become active. In a case where the number of PCIs to become active is one out of the physical cell ID (PCI) corresponding to the serving cell and the PCI corresponding to the non-serving cell, the control section 110 may perform a control operation so as not to activate a state other than the transmission configuration indication (TCI) state associated with the PCI to become active.

When the first physical cell ID (PCI) corresponding to the serving cell and the second PCI corresponding to the non-serving cell become active, the transmitting/receiving section 120 may transmit information related to the TCI state corresponding to each of the first and second PCIs. It may be assumed that the control section 110 performs a control operation so as to prevent the DL signals transmitted from the respective cells from overlapping each other in the time domain based on the information on the TCI state corresponding to each of the first and second PCIs, or determines the DL signal received by the terminal based on a given rule in a case where the DL signals transmitted from the respective cells overlap each other in the time domain.

### (User Terminal)

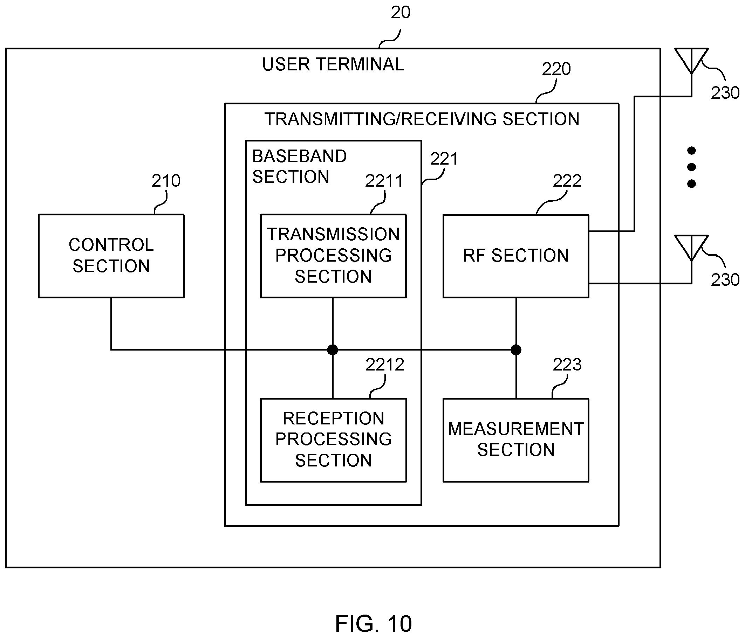

Fig. 10 is a diagram illustrating an example of a configuration of the user terminal according to the embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform, and otherwise, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

It is noted that the transmitting section and the receiving section of the user terminal 20 in the present disclosure may include at least one of the transmitting/receiving section 220 and the transmitting/receiving antenna 230.

The transmitting/receiving section 220 may acquire (or, receive) the system information based on the information transmitted from the cell of the PCI to become active. When the PCI corresponding to the non-serving cell becomes active, the transmitting/receiving section 220 may acquire the system information based on the UE specific RRC signaling included in the downlink shared channel transmitted from the non-serving cell. The transmitting/receiving section 220 may receive information for updating the activated TCI state to the TCI state associated with the PCI corresponding to the serving cell. In a case where the number of PCIs to become active is one out of the physical cell ID (PCI) corresponding to the serving cell and the PCI corresponding to the non-serving cell, the control section 210 may assume that a state other than the transmission configuration indication (TCI) state associated with the PCI to become active is not activated. The control section 210 may assume that the PCI corresponding to the serving cell is always active when the number of PCIs to become active is one out of the PCI corresponding to the serving cell and the PCI corresponding to the non-serving cell. When the PCI corresponding to the non-serving cell becomes active, the control section 210 may perform a control operation to monitor the DL signal based on the TCI associated with the PCI corresponding to the serving cell in a certain period.

When the first physical cell ID (PCI) corresponding to the serving cell and the second PCI corresponding to the non-serving cell become active, the transmitting/receiving section 220 may receive information related to the TCI state corresponding to each of the first and second PCIs. The control section 210 may control the reception of the DL signal on the assumption that the DL signals transmitted from the respective cells do not overlap each other in the time domain based on the information on the TCI state corresponding to each of the first and second PCIs, or may control the reception of the DL signal based on a given rule in a case where the DL signals transmitted from the respective cells overlap each other in the time domain.

When the first DL signal transmitted from the serving cell and the second DL signal transmitted from the non-serving cell overlap each other in time domain, the given rule may be a priority set between the first DL signal and the second DL signal. When the first DL signal is the system information, the given rule may be a rule in which the first DL signal is prioritized over the second DL signal. When a first downlink control channel transmitted from the serving cell and a second downlink control channel transmitted from the non-serving cell overlap each other in time domain, the given rule may be a priority order set between at least two of the cell type, the search space type, the cell index, and the search space ID.

### (Hardware Configuration)

It is noted that the block diagrams that have been used to describe the above embodiments illustrate blocks in functional units. These functional blocks (components) are implemented in arbitrary combinations of at least one of hardware and software. Further, the method of implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

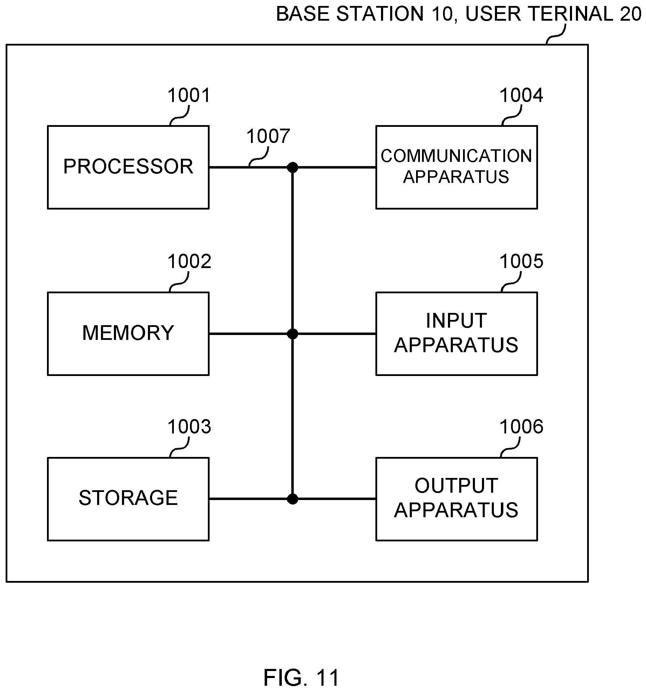

For example, the base station, the user terminal, and the like according to one embodiment of the present disclosure may function as a computer that executes the processing of the radio communication method of the present disclosure. Fig. 11 is a diagram illustrating an example of a hardware configuration of the base station and the user terminal according to the embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

It is noted that in the present disclosure, the terms such as an apparatus, a circuit, a device, a section, and a unit can be interchangeable with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be included. Further, the processing may be executed by one processor, or the processing may be executed by two or more processors simultaneously or sequentially, or using other methods. It is noted that the processor 1001 may be implemented by one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading and writing of data at the memory 1002 and the storage 1003.

The processor 1001 controls the entire computer by, for example, operating an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, and the like from at least one of the storage 1003 and the communication apparatus 1004 into the memory 1002, and performs various types of processing according to these. As the program, a program that causes a computer to execute at least a part of the operations described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, and other appropriate storage media. The storage 1003 may be referred to as a "secondary storage apparatus".

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). It is noted that the input apparatus 1005 and the output apparatus 1006 may be an integrated configuration (for example, touch panel).

The apparatuses such as the processor 1001 and the memory 1002 are connected by the bus 1007 for communicating information. The bus 1007 may be formed using a single bus, or may be formed using different buses for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented using at least one of these pieces of hardware.

### (Modifications)

It is noted that terms described in the present disclosure and terms necessary for understanding the present disclosure may be replaced with terms that have the same or similar meanings. For example, a channel, a symbol, and a signal (signal or signaling) may be interchangeable with one another. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. The radio frame, the subframe, the slot, the mini slot, and the symbol may be called by other applicable names, respectively. It is noted that time units such as a frame, a subframe, a slot, a mini slot, and a symbol in the present disclosure may be interchangeable with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. It is noted that a unit representing a TTI may be referred to as a slot, a mini slot, or the like instead of a subframe.

Here, a TTI refers to, for example, a minimum time unit of scheduling in radio communication. For example, in the LTE system, a base station performs scheduling to allocate radio resources (a frequency bandwidth, transmit power, and the like that can be used in each user terminal) to each user terminal in TTI units. It is noted that the definition of a TTI is not limited to this.

A TTI may be a transmission time unit of a channel-coded data packet (transport block), a code block, a codeword, and the like or may be a processing unit of scheduling, link adaptation, and the like It is noted that, when a TTI is given, a time interval (for example, the number of symbols) to which a transport block, a code block, a codeword, or the like is actually mapped may be shorter than the TTI.

It is noted that, when one slot or one mini slot is referred to as a TTI, one or more TTIs (that is, one or more slots or one or more mini slots) may be a minimum time unit of scheduling. The number of slots (the number of mini slots) constituting the minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

It is noted that, a long TTI (such as a usual TTI or a subframe) may be replaced with a TTI having a time duration exceeding 1 ms. A short TTI (such as a shortened TTI) may be replaced with a TTI having a TTI length less than the TTI length of a long TTI and more than or equal to 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

An RB may include one or more symbols in the time domain, and may have a length of one slot, one mini slot, one subframe, or one TTI. One TTI, one subframe, and the like may each include one or more resource blocks.

It is noted that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to assume transmission/reception of a given signal/channel outside the active BWP. It is noted that a "cell", a "carrier", and the like in the present disclosure may be interchangeable with "BWP".

It is noted that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, and the like described in the present disclosure may be represented using absolute values, or may be represented using relative values with respect to given values, or may be represented using other corresponding information. For example, a radio resource may be instructed by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, an instruction, a command, information, a signal, a bit, a symbol, a chip, and the like, which may be referred to throughout the above description, may be represented by a voltage, a current, an electromagnetic wave, a magnetic field or a magnetic particle, an optical field or an optical photon, or any combination of these.

Information, signals, and the like can be output in at least one of a direction from a higher layer to a lower layer or a direction from a lower layer to a higher layer. Information, signals, and the like may be input and output via a plurality of network nodes.

Input and output information, signals, and the like may be stored in a specific location (for example, memory), or may be managed using a measurement table. The input/output information, signals, and the like can be overwritten, updated, or appended. The output information, signals, and the like may be deleted. Information, signals, and the like that have been input may be transmitted to another apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

It is noted that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and the like. Further, notification of the MAC signaling may be performed using, for example, a MAC control element (CE).

Also, notification of given information (for example, notification of information to the effect that "X holds") does not necessarily have to be sent explicitly, and can be sent implicitly (for example, by not notifying this given information, by reporting another piece of information, and the like).

Determination may be performed using a value represented by one bit (0 or 1), or may be performed using a Boolean represented by true or false, or may be performed by comparing numerical values (for example, comparison with a given value).

Software, regardless of whether it is referred to as software, firmware, middleware, microcode, or a hardware description language, or referred to by another name, should be interpreted broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

Moreover, software, instructions, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station and the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmission apparatus, a reception apparatus, a radio communication apparatus, and the like. It is noted that at least one of the base station or the mobile station may be a device mounted on a moving body (moving object), a moving body itself, and the like.

The moving body refers to a movable object, the moving speed is arbitrary, and naturally includes a case in which the moving body is stopped. The moving body includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone, a multicopter, a quadcopter, a balloon, and objects mounted thereon, and is not limited thereto. Further, the moving body may be a moving body that autonomously travels based on an operation command.

The moving body may be a transportation (for example, a car, an airplane, or the like), an unmanned moving body (for example, a drone, an autonomous car, or the like), or a (manned or unmanned) robot. It is noted that at least one of the base station and the mobile station also includes an apparatus that does not necessarily move during a communication operation. For example, at least one of the base station and the mobile station may be an Internet of Things (loT) device such as a sensor.

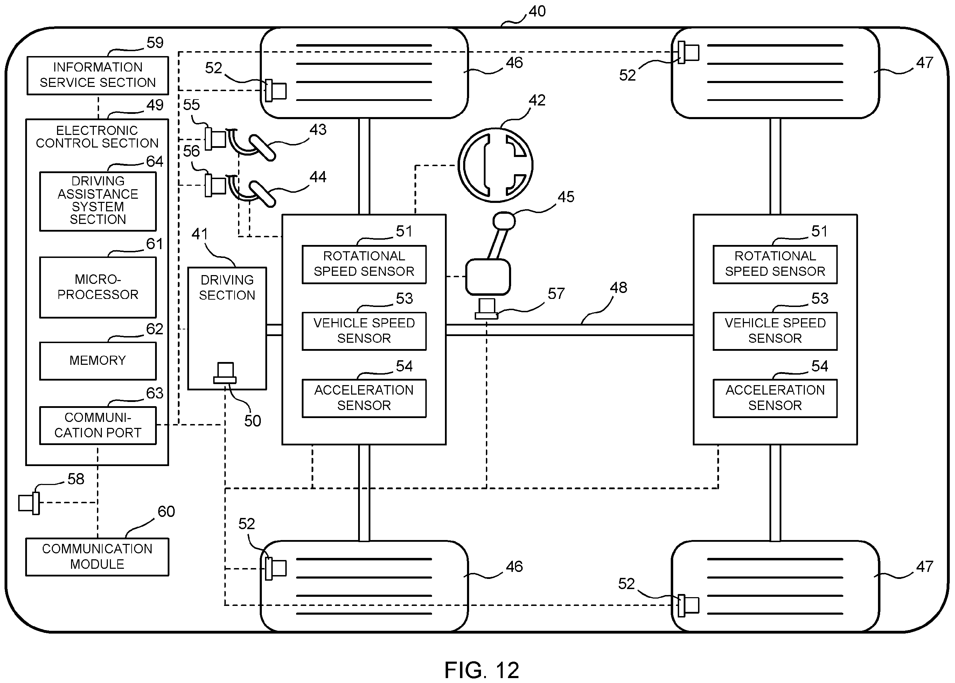

Fig. 12 is a diagram illustrating an example of a vehicle according to the embodiment. A vehicle 40 includes a drive unit 41, a steering unit 42, an accelerator pedal 43, a brake pedal 44, a shift lever 45, left and right front wheels 46, left and right rear wheels 47, an axle 48, an electronic control unit 49, various sensors (includes a current sensor 50, a rotation speed sensor 51, an air pressure sensor 52, a vehicle speed sensor 53, an acceleration sensor 54, an accelerator pedal sensor 55, a brake pedal sensor 56, a shift lever sensor 57, and an object detection sensor 58), an information service unit 59, and a communication module 60.

The drive unit 41 includes, for example, at least one of an engine, a motor, and a hybrid of an engine and a motor. The steering unit 42 includes at least a steering wheel (also referred to as a handle), and is configured to steer at least one of the front wheel 46 and the rear wheel 47 based on the operation of the steering wheel operated by a user.

The electronic control unit 49 includes a microprocessor 61, a memory (ROM, RAM) 62, and a communication port (for example, an input/output (IO) port) 63. Signals from the various sensors 50 to 58 provided in the vehicle are input to the electronic control unit 49. The electronic control unit 49 may be referred to as an electronic control unit (ECU).

The signals from the various sensors 50 to 58 include a current signal from the current sensor 50 that senses the current of the motor, a rotation speed signal of the front wheel 46/the rear wheel 47 acquired by the rotation speed sensor 51, an air pressure signal of the front wheel 46/the rear wheel 47 acquired by the air pressure sensor 52, a vehicle speed signal acquired by the vehicle speed sensor 53, an acceleration signal acquired by the acceleration sensor 54, a depression amount signal of the accelerator pedal 43 acquired by the accelerator pedal sensor 55, a depression amount signal of the brake pedal 44 acquired by the brake pedal sensor 56, an operation signal of the shift lever 45 acquired by the shift lever sensor 57, a detection signal for detecting an obstacle, a vehicle, a pedestrian, and the like acquired by the object detection sensor 58, and the like.

The information service unit 59 includes various devices for providing (outputting) various types of information such as driving information, traffic information, and entertainment information, such as a car navigation system, an audio system, a speaker, a display, a television, and a radio, and one or more ECUs that control these devices. The information service unit 59 provides various types of information/services (for example, multimedia information/multimedia services) to an occupant of the vehicle 40 using information acquired from an external device via the communication module 60 or the like.

The information service unit 59 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs an output to the outside.

A driving assistance system unit 64 includes various devices for providing functions for preventing an accident in advance and reducing a driving load of a driver, such as a millimeter wave radar, light detection and ranging (LiDAR), a camera, a positioning locator (for example, global navigation satellite system (GNSS) or the like), map information (for example, a high definition (HD) map, an autonomous vehicle (AV) map, and the like), a gyro system (for example, an inertial measurement unit (IMU), an inertial navigation system (INS), or the like), an artificial intelligence (Al) chip, and an Al processor, and one or more ECUs for controlling these devices. Further, the driving assistance system unit 64 also transmits and receives various types of information via the communication module 60 so as to achieve a driving assistance function or an automatic driving function.

The communication module 60 can communicate with the microprocessor 61 and components of the vehicle 40 via the communication port 63. For example, the communication module 60 transmits and receives data (information) to and from the drive unit 41, the steering unit 42, the accelerator pedal 43, the brake pedal 44, the shift lever 45, the left and right front wheels 46, the left and right rear wheels 47, the axle 48, the microprocessor 61 and the memory (ROM, RAM) 62 in the electronic control unit 49, and the various sensors 50 to 58 provided in the vehicle 40 via the communication port 63.

The communication module 60 is a communication device that can be controlled by the microprocessor 61 of the electronic control unit 49 and can communicate with an external device. For example, various types of information are transmitted and received to and from an external device via radio communication. The communication module 60 may be either inside or outside the electronic control unit 49. The external device may be, for example, the base station 10, the user terminal 20, or the like described above. Furthermore, the communication module 60 may be, for example, at least one of the base station 10 and the user terminal 20 described above (may function as at least one of the base station 10 and the user terminal 20).

The communication module 60 may transmit at least one of the above-described signals from the various sensors 50 to 58 input to the electronic control unit 49, information obtained based on the signals, and information based on an input from the outside (user) obtained via the information service unit 59 to the external device via radio communication. The electronic control unit 49, the various sensors 50 to 58, the information service unit 59, and the like may be referred to as input units that receive inputs. For example, the PUSCH transmitted by the communication module 60 may include information based on the above input.

The communication module 60 receives various types of information (traffic information, traffic signal information, inter-vehicle information, and the like) transmitted from an external device, and displays the information on the information service unit 59 provided in the vehicle. The information service unit 59 may be referred to as an output unit that outputs information (for example, information is output to a device such as a display or a speaker based on a PDSCH (or data/information decoded from the PDSCH) received by the communication module 60).

The communication module 60 also stores various types of information received from external devices in the memory 62 available by the microprocessor 61. Based on the information stored in the memory 62, the microprocessor 61 may control the drive unit 41, the steering unit 42, the accelerator pedal 43, the brake pedal 44, the shift lever 45, the left and right front wheels 46, the left and right rear wheels 47, the axle 48, the various sensors 50 to 58, and the like provided in the vehicle 40.

The base station in the present disclosure may be interchangeable with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, the terms such as "uplink" and "downlink" may be interchangeable with terms corresponding to terminal-to-terminal communication (for example, "sidelink"). For example, an uplink channel, a downlink channel, and the like may be interchangeable with a sidelink channel.

Similarly, the user terminal in the present disclosure may be replaced with a base station. In the case, the base station 10 may have the function of the above-mentioned user terminal 20.

In the present disclosure, the operation performed by the base station may be performed by an upper node thereof in some cases. In a network including one or a plurality of network nodes with a base station, it is clear that various operations performed for communication with a terminal can be performed by a base station, one or more network nodes (for example, mobility management entity (MME) and serving-gateway (S-GW) are possible, but are not limitations) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, for the method described in the present disclosure, various step elements are presented by using an illustrative order, and the method is not limited to the presented specific order.

Each aspect/embodiment described in the present disclosure may be applied to a system using Long-Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG(x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system extended, modified, generated, or prescribed based on those described above, and the like. Further, a plurality of systems may be combined (for example, a combination of LTE or LTE-A and 5G, and the like) and applied.

The phrase "based on" used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" judging, calculating, computing, processing, deriving, investigating, looking up, search, inquiry (for example, looking up in table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

"Determining" may be interchangeable with "assuming", "expecting", "considering", and the like.

The "maximum transmit power" described in the present disclosure may mean the maximum value of the transmit power, may mean the nominal UE maximum transmit power, or may mean the rated UE maximum transmit power.

The terms "connected" and "coupled" used in the present disclosure, or all variations thereof mean all direct or indirect connections or coupling between two or more elements, and can include the presence of one or more intermediate elements between two elements "connected" or "coupled" with each other. The coupling or connection between the elements may be physical, logical, or a combination of these. For example, the term "connection" is interchangeable with "access".

In the present disclosure, when two elements are connected, the two elements can be considered to be "connected" or "coupled" with each other by using one or more electrical wires, cables, printed electrical connections, and the like, and using, as some non-limiting and non-inclusive examples, electromagnetic energy and the like having a wavelength in a radio frequency domain, a microwave domain, and an optical (both visible and invisible) domain.

In the present disclosure, the phrase "A and B are different" may mean "A and B are different from each other". It is noted that the phrase may mean that "A and B are different from C". The terms such as "leave", "coupled", and the like may be interpreted similarly to "different".

In the present disclosure, when "include", "including", and variations thereof are used, these terms are intended to be inclusive similarly to the term "comprising". The term "or" used in the present disclosure is intended not to be an exclusive-OR.

In the present disclosure, when articles in English such as "a", "an", and "the" are added in translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a receiving section configured to receive, when a first physical cell ID (PCI) corresponding to a serving cell and a second PCI corresponding to a non-serving cell become active, information on a TCI state corresponding to each of the first and second PCIs; and
a control section configured to control, based on the information on the TCI state corresponding to each of the first and second PCIs, reception of DL signals on assumption that the DL signals transmitted from the respective cells do not overlap each other in a time domain, or to control, when the DL signals transmitted from the respective cells overlap each other in the time domain, the reception of the DL signals based on a given rule.

2. The terminal according to claim 1, wherein, when a first DL signal transmitted from the serving cell and a second DL signal transmitted from the non-serving cell overlap each other in the time domain, the given rule is a priority set between the first DL signal and the second DL signal.

3. The terminal according to claim 2, wherein, when the first DL signal is system information, the given rule is a rule in which the first DL signal is prioritized over the second DL signal.

4. The terminal according to claim 1, wherein, when a first downlink control channel transmitted from the serving cell and a second downlink control channel transmitted from the non-serving cell overlap each other in the time domain, the given rule is a priority order set between at least two of a cell type, a search space type, a cell index, and a search space ID.

5. A radio communication method of a terminal, the radio communication method comprising the steps of:
receiving, when a first physical cell ID (PCI) corresponding to a serving cell and a second PCI corresponding to a non-serving cell become active, information on a TCI state corresponding to each of the first and second PCIs; and
controlling, based on the information on the TCI state corresponding to each of the first and second PCIs, reception of DL signals on assumption that the DL signals transmitted from the respective cells do not overlap each other in a time domain, or controlling, when the DL signals transmitted from the respective cells overlap each other in the time domain, the reception of the DL signals based on a given rule.

6. A base station comprising:
a transmitting section configured to transmit, when a first physical cell ID (PCI) corresponding to a serving cell and a second PCI corresponding to a non-serving cell become active, information on a TCI state corresponding to each of the first and second PCIs; and
a control section configured to perform, based on the information on the TCI state corresponding to each of the first and second PCIs, a control operation of preventing DL signals transmitted from the respective cells from overlapping each other in a time domain, or to assume that, when the DL signals transmitted from the respective cells overlap each other in the time domain, the DL signal received by a terminal is determined based on a given rule.
